**Europäisches Patentamt**

**European Patent Office**

**Office européen des brevets**

(19)

(11) Veröffentlichungsnummer: **0 183 261**
**B1**

(12) **EUROPÄISCHE PATENTSCHRIFT**

(45) Veröffentlichungstag der Patentschrift:
26.07.89

(51) Int. Cl.⁴: **B 60 R 9/04**

(21) Anmeldenummer: 85115095.3

(22) Anmeldetag: 28.11.85

(54) Hochdachträger-Element für ein Kraftfahrzeug.

(30) Priorität: **28.11.84 DE 3443377**

(43) Veröffentlichungstag der Anmeldung:
**04.06.86 Patentblatt 86/23**

(45) Bekanntmachung des Hinweises auf die Patenterteilung:
**26.07.89 Patentblatt 89/30**

(84) Benannte Vertragsstaaten:
**AT BE CH DE FR IT LI LU NL SE**

(56) Entgegenhaltungen:
**DE-U- 1 964 589**
**US-A- 3 984 038**

**CAMPING + FREIZEIT 86, Katalog 1986, Seite 139,**
**München, Atera Lastenträgersystem**

(73) Patentinhaber: **Tittel, Eberhard, Lagerstrasse 1,**
**D-7981 Grünkraut-Gullen (DE)**

(72) Erfinder: **Tittel, Eberhard, Lagerstrasse 1,**
**D-7981 Grünkraut-Gullen (DE)**

(74) Vertreter: **Schmidt-Evers, Jürgen, Dipl.-Ing. et al,**
**Patentanwälte Dipl.-Ing. H. Mitscherlich Dipl.-Ing. K.**
**Gunschmann Dipl.-Ing. Dr.rer.nat. W. Körber Dipl.-Ing. J.**
**Schmidt-Evers Dipl.-Ing. W. Melzer**
**Steinsdorfstrasse 10, D-8000 München 22 (DE)**

## Beschreibung

Die Erfindung bezieht sich auf ein Hochdachträger-Element nach dem Oberbegriff des Anspruches 1. Ein solches Element ist aus dem Dokument US-A-3 984 038 bekannt.

Bei normalen Dachträgern für Kraftfahrzeuge, wie sie beispielsweise für Personenkraftfahrzeuge benutzt werden, wird eine niedrige Bauhöhe angestrebt, um sowohl Material und Eigengewicht einzusparen als auch dem Fahrtwind eine möglichst geringe Angriffsfläche zu bieten.

Dagegen sind Hochdachträger – wie die Bezeichnung schon zum Ausdruck bringt – wesentlich höher ausgeführt, und sie unterscheiden sich von normalen Dachträgern zum einen durch ihre Höhe und zum anderen durch ihre konstruktive Ausgestaltung, die so ausgelegt ist, dass erheblich grössere horizontale Belastungen aufgenommen werden können, als wie sie bei normalen Dachträgern auftreten. Die höheren Belastungen sind durch die Höhe des Hochdachträgers vorgegeben, die sich als Wirkabstand für Drehmomente darstellt, die bei der Benutzung an einem Kraftfahrzeug auftreten.

Die Bauausführung eines Hochdachträgers kann unterschiedlich sein und richtet sich nach Grösse und Form der Last, die transportiert werden soll. Eine einfache Bauausführung kann aus einem Paar Hochdachträger-Elementen bestehen, von denen das eine auf der einen Seite und das andere auf der anderen Seite des Kraftfahrzeuges z.B. an einer Regenrinne befestigt ist und zwischen denen sich quer zum Kraftfahrzeug ein Tragholm erstreckt. Da ein Hochdachträger bzw. die Hochdachträger-Elemente bedeutenden Horizontalbelastungen ausgesetzt sind, besteht jedes Hochdachträger-Element aus zwei in Fahrtrichtung hintereinanderliegenden Stützbeinen, die miteinander verstrebt sind.

Die Forderung nach einem Hochdachträger kann unterschiedliche Ursachen haben und z.B. durch die Form der Last begründet sein. Insbesondere bei Camping-Kraftfahrzeugen besteht dann die Forderung nach einem Hochdachträger, wenn zumindest Teile des Kraftfahrzeugdachs höher als normal ausgeführt sind, um im Kraftfahrzeug eine normale Stehhöhe zu erreichen, oder wenn Teile des Daches teilweise ausklappbar sind, wie es z.B. bei Wohnmobilen der Fall ist.

Der Erfindung liegt die Aufgabe zugrunde, ein Hochdachträger-Element der eingangs bezeichneten Bauart und Zweckbestimmung so auszugestalten, dass die Höhe des Hochdachträgers an die zu transportierende Last oder an die Dachform des Kraftfahrzeuges anpassbar ist.

Diese Aufgabe wird durch die im Anspruch 1 enthaltenen Merkmale gelöst.

Die erfindungsgemässe Ausgestaltung ermöglicht es, die Höhe des Hochdachträger-Elementes und somit des Hochdachträgers aus vorgegebenen Gründen, z.B. wegen einer besonderen Form der Last oder wegen eines vorhandenen Dachausbaus in gewünschter Weise anzupassen und zwar durch Zwischenstücke, die zwischen den Stützfüssen und den Stützbeinen des Hochdachträger-Elementes zu montieren sind. Die Montage lässt sich einfach und schnell durchführen, weil zur Befestigung der Stützfüsse und der Stützbeine aneinander oder zur Befestigung von Zwischenstücken an den Stützfüssen und Stützbeinen Steckverbindungen vorgesehen sind, die eine leichte Handhabung ermöglichen. Dabei bedarf es zur Anpassung der Höhe der Hochdachträger-Elemente keiner die Form der Einzelteile verändernden Nacharbeit und die Anpassung lässt sich beschädigungsfrei durchführen, was insbesondere im Hinblick auf Oberflächenbeschädigung und eine daraus resultierende Korrosion von Bedeutung ist.

Die erfindungsgemässe Ausgestaltung ermöglicht es, das Hochdachträger-Element und somit den Hochdachträger an die örtlichen Gegebenheiten anzupassen und somit relativ niedrig auszuführen. Hierdurch können die bei der Benutzung des Hochdachträgers auftretenden Horizontalbelastungen möglichst niedrig gehalten werden.

Die durch die erfindungsgemässe Ausgestaltung erzielbaren Vorteile werden auch dadurch deutlich, dass für alle Bauhöhen eine gleiche Grundausstattung, nämlich gleiche Befestigungsfüsse und Stützbeine zur Benutzung kommen. Hierdurch lässt sich sowohl die Herstellung als auch Lagerhaltung erheblich vereinfachen. In weiterer Ausgestaltung der Erfindung werden der vorerwähnten Grundausstattung gemäss Anspruch 4 Zwischenstücke unterschiedlicher Längen in bestimmten Abstufungen beigestellt. Hierdurch lässt sich durch den Einsatz von jeweils einem oder zwei Zwischenstücken die gewünschte Höhe annähernd realisieren. Je geringer die Abstufungen der Längen der Zwischenstücke sind, desto genauer lässt sich die Höhe an die örtlichen Gegebenheiten anpassen.

Die erfindungsgemässe Ausgestaltung ist nicht nur im Hinblick auf das Überbauen von Dachausbauten vorteilhaft, sondern sie ermöglicht auch eine Anpassung der Höhe des Hochdachträgers an zu transportierende Gegenstände, die seitlich am Hochdachträger-Element bzw. am Hochdachträger gehalten sind, wie es z.B. beim Transport von Segelbrettern bekannt ist. In einem solchen Fall ermöglicht die erfindungsgemässe Ausgestaltung eine Anpassung an den zu transportierenden Gegenstand, z.B. an die Breite eines Segelbrettes, das in Hochkant-Anordnung seitlich am Hochdachträger befestigt ist.

Die Ausgestaltungen nach den Ansprüchen 2 und 3 sowie 5 und 7 ergeben einfache Ausgestaltungen, die preiswert herzustellen sind. Eine Steckverbindung mit einem sich senkrecht erstreckenden Steckzapfen ist deshalb vorteilhaft weil das Gewicht der Last in die Einsteckrichtung wirkt. Die Ausbildungen nach den Ansprüchen 8 bis 10 führen aufgrund einer weiteren Verstrebung nicht nur zu einer erhöhten Festigkeit des Hochdachträger-Elements und somit des Hochdachträgers, sondern durch diese Ausbildung wird auch die Anzahl der zu montierenden Bauteile verringert, weil die beiden zu einem Hochdachträger-Element gehörigen Zwischenstücke aufgrund ihrer Verstrebung ein Bauteil bilden.

Die Ausgestaltung nach Anspruch 6 ist aus herstellungstechnischen Gründen und aus Festigkeitsgründen vorteilhaft.

Wie eingangs schon beschrieben, wirken an einem Hochdachträger bei Fahrt erhebliche horizontale Belastungen. Diese sind sowohl in Fahrtrichtung als auch quer dazu gerichtet und treten beim Bremsen bzw. Beschleunigen und beim Kurvenfahren vermehrt auf. Die in den Ansprüchen 11 und 12 enthaltenen Merkmale ergeben eine Ausgestaltung zur Befestigung eines Tragholms mit je einem Hochdachträger-Element, die auf einfache Weise eine belastbare, lösbare Verbindung zwischen dem Tragholm und den Hochdachträger-Elementen ermöglicht. Erfindungsgemäss wird der Tragholm durch anschraubbare Klemmschellen gegen die Hochdachträger-Elemente geklemmt. Aufgrund der Klemmwirkung und aufgrund der Befestigung durch Schrauben ergibt sich eine Verbindung, die selbst bei plötzlichen Spitzenbelastungen, die durch Vibrationen des Fahrzeuges hervorgerufen werden, zu keiner Zerstörung oder auch Beschädigung der Verbindung bzw. deren Teile führt. Im Gegensatz hierzu haben Versuche gezeigt, dass Schweissverbindungen auch in Form von Knotenblechen nicht geeignet sind, die anfallenden Belastungen über einen grösseren Zeitraum aufzunehmen.

Die im Anspruch 12 enthaltenen Merkmale ergeben eine gleichmässige Belastung der Befestigungsfüsse eines Hochdachträger-Elementenpaares.

Nachfolgend werden zwei Ausführungsbeispiele der Erfindung anhand einer vereinfachten Zeichnung näher beschrieben. Es zeigen:

Figur 1 einen erfindungsgemäss ausgestalteten Hochdachträger in perspektivischer Darstellung;

Figur 2 gleiche Grundausstattungen eines Hochdachträger-Elementes mit verschiedenen Zwischenstücken;

Figur 3 ein erfindungsgemäss ausgestaltetes Hochdachträger-Element in der Vorderansicht als zweites Ausführungsbeispiel.

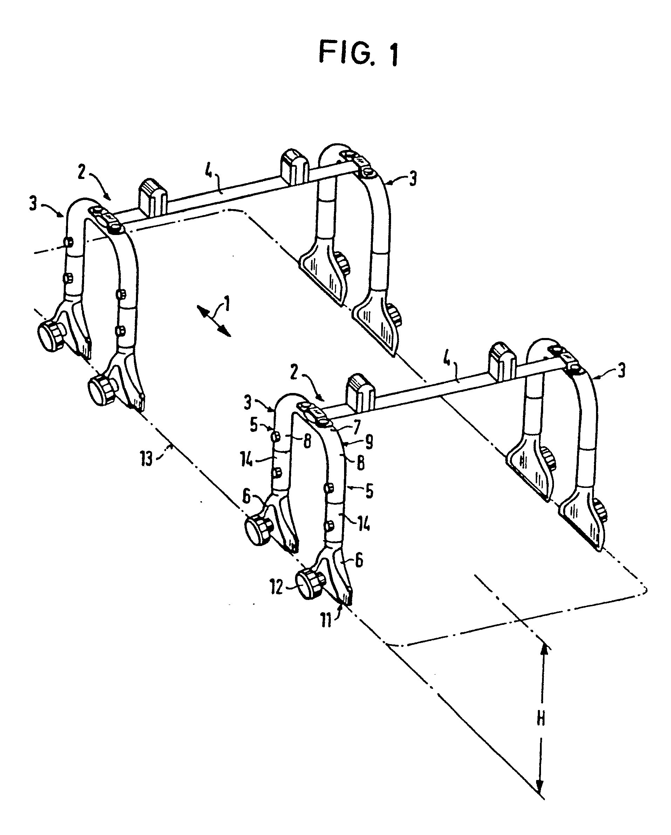

Die in Figur 1 dargestellte Hochdachträger-Kombination umfasst zwei in Längsrichtung 1 eines nur andeutungsweise dargestellten Kraftfahrzeuges hintereinander angeordnete Hochdachträger-Elementenpaare 2, die jeweils aus zwei einander gleichen Hochdachträger-Elementen 3 bestehen, zwischen denen sich ein horizontaler Tragholm 4 erstreckt.

Jedes Hochdachträger-Element 3 besteht aus zwei Stützbeinen 5, die in Längsrichtung 1 hintereinander angeordnet sind, die auf jeweils einem Befestigungsfuss 6 stehen und die an ihren den Befestigungsfüssen 6 abgewandten Enden durch eine Verbindungsstrebe 7 miteinander verbunden sind. Die Verbindungsstrebe 7 ist mit oberen Endabschnitten 8 der Stützbeine 5 einstückig hergestellt und zwar durch eine U-förmige Ausbiegung eines runden Rohres zu einem mit 9 bezeichneten Stützbeinoberteil.

Die Befestigungsfüsse 6 sind mit üblichen Klemmvorrichtungen 11 mit Hand-Klemmschraube 12 zur Befestigung an einer andeutungsweise dargestellten Dachrinne 13 im Bereich der Dachkante des nicht dargestellten Kraftfahrzeuges ausgeführt.

Die Höhe H der Hochdachträger-Elemente 3 und somit auch des Hochdachträgers ist durch Zwischenstücke 14 veränderlich, die zwischen dem Stützfussoberteil 9 und den Befestigungsfüssen 6 angeordnet sind.

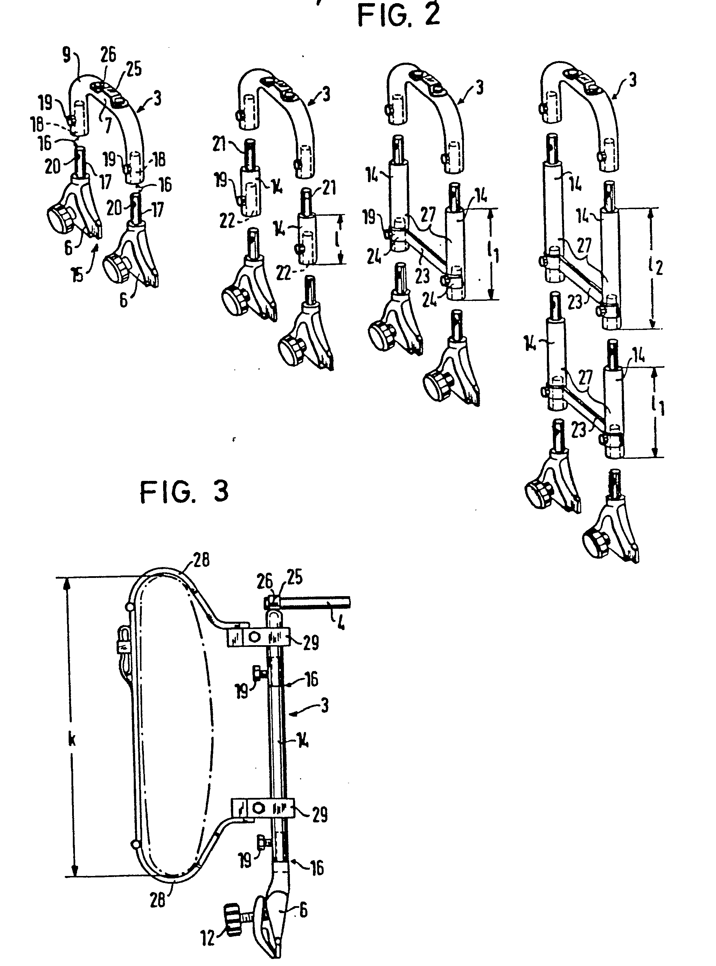

Die Hochdachträger-Elemente 3 bestehen aus einer immer gleichen, in Figur 2 mit 15 bezeichneten Grundausstattung, die das Stützbeinoberteil 9 sowie zwei Befestigungsfüsse 6 umfasst. Zur Anpassung an gewünschte Höhen H stehen Zwischenstücke 14 zur Verfügung, von denen in Figur 2 unterschiedliche Längen und Ausführungsformen dargestellt sind.

Jedes Stützbeinoberteil 9 ist mit den zugehörigen Befestigungsfüssen 6 durch Steckverbindungen 16 verbindbar, die jeweils einen senkrechten, im Querschnitt runden Steckzapfen 17 am Befestigungsfuss 6 und eine entsprechend runde Steckaufnahme 18 in den freien Enden des Stützbeinoberteiles 9 umfassen. Der Durchmesser des Steckzapfens 17 entspricht dem Innendurchmesser des Rohres, aus dem das Stützbeinoberteil 9 gebogen ist.

Den Steckverbindungen 16 ist jeweils eine Sicherungsvorrichtung in Form einer Spannschraube 19 zugeordnet, die im Bereich der Steckaufnahme 18 in einem Gewindeloch durch die Rohrwandung schraubbar und gegen den Steckzapfen 17 spannbar ist oder in diesen einfasst (bei 20).

Alle Zwischenstücke 14 weisen am einen Ende jeweils einen dem Steckzapfen 17 entsprechenden Steckzapfen 21 und an ihrem anderen Ende eine der Steckaufnahmen 18 entsprechende Steckaufnahme 22 auf. Die Zwischenstücke 14 passen somit in die Steckverbindungen 16 und sind ebenfalls durch Spannschrauben 19 sicherbar.

Die in Figur 2 jeweils in Verbindung mit einer Grundausstattung 15 dargestellten Zwischenstücke 14 unterscheiden sich voneinander durch unterschiedliche Längen ($1$, $1_1$, $1_2$) und dadurch, dass die längeren Zwischenstücke 14 eines Hochdachträger-Elementes 3 durch eine Strebe 23 miteinander verbunden sind. Die Strebe 23 weist an ihren Enden gekrümmte Formstücke 24 auf, die der Mantelfläche der Zwischenstücke 14 entsprechend geformt sind und letztere teilweise umgreifen. Der Befestigung der Strebe 23 dienen die im Bereich der Steckaufnahmen 22 an den Zwischenstücken 14 ebenfalls vorhandenen Spannschrauben 19.

Die Tragholme 4 sind an den Hochdachträger-Elementen 3 mit Hilfe von anschraubbaren Klemmschellen 25 befestigt, die auf den Oberseiten der Verbindungsstege 7 mittels Schrauben 26 befestigt sind. Die Klemmschellen 25 sind dem Querschnitt der Tragholme 4 entsprechend ⊓ -förmig geformt, wobei durch das Anziehen der Schrauben 26, die Tragholme 4 gegen die Verbindungsstreben 7 gespannt werden.

Für eine verhältnismässig geringe Höhe des Hochdachträgers reicht die Grundausstattung 15 der Hochdachträger-Elemente 3 aus. In einem solchen Fall kann auf Zwischenstücke 14 verzichtet werden. Bei grösseren Höhen ist ein passendes Zwischenstück 14 zu benutzen, die als Teilsatz in bestimmten Längenabstufungen vorhanden sind. Bei der in Figur 2 ganz rechts dargestellten sehr hohen Ausführungsform sind zwei durch die Streben 23 miteinander verbundene Zwischenstückpaare 27 übereinander gesteckt, wobei die Länge $l_1$ des einen Zwischenstückpaares 27 der Länge $l_1$ der nächst niedrigeren Ausführungsform entspricht.

Das zweite Ausführungsbeispiel gemäss Figur 3 unterscheidet sich vom vorbeschriebenen Ausführungsbeispiel dadurch, dass ein zusätzliches Tragorgan 28 vorgesehen ist, das seitlich an den Hochdachträger-Elementen 3 befestigt ist. Im vorliegenden Fall handelt es sich um ein Tragorgan 28 für ein Segelbrett, dessen Querschnitt durch strichpunktierte Linien andeutungsweise dargestellt ist. Das Tragorgan 28 ist durch zwei Klemmschellen 29 am dargestellten Hochdachträger-Element 3 befestigt.

Bei dieser Ausführungsform kann das mit k bezeichnete Höhenmass des Tragorgans 28 durch die Höhe des Hochdachträger-Elementes 3 beeinflusst und somit verändert werden.

Auf den Tragorganen 4 sind weitere Trag- oder Klemmelemente 31 angeordnet, die z.B. der Halterung von nicht dargestellten Skiern dienen.

## Patentansprüche

1. Verlängerbares Hochdachträger-Element (3) für ein Kraftfahrzeug, bestehend aus zwei mit je einem Befestigungsfuss (6) versehenen Stützbeinen (5) und einer Verbindungsstrebe (7), die mit den beiden Stützbeinen (5) verbunden ist, wobei die Stützbeine (5) mit ihren Befestigungsfüssen (6) durch eine Steckverbindung (16) miteinander verbunden sind, dadurch gekennzeichnet, dass zur wahlweisen Verlängerung der Stützbeine (5) mindestens ein steckbares Zwischenstück (14) vorgesehen ist, das jeweils zwischen dem Stützbein (5) und dem Befestigungsfuss (6) eingesteckt wird.

2. Hochdachträger-Element nach Anspruch 1, dadurch gekennzeichnet, dass die Steckverbindungen (16) einen sich längs des Stützbeines (5) erstreckenden Steckzapfen (17) und eine im Querschnitt entsprechend bemessene Steckaufnahme (18) umfassen.

3. Hochdachträger-Element nach Anspruch 1 oder 2, dadurch gekennzeichnet, dass die Stützbeine (5) und/oder die Befestigungsfüsse (6) aus rohrförmigen Halbzeug hergestellt sind und die Steckaufnahme (18) durch den Innenquerschnitt des Halbzeugs gebildet ist.

4. Hochdachträger-Element nach einem der Ansprüche 1 bis 3, dadurch gekennzeichnet, dass mehrere Zwischenstücke (14) in unterschiedlichen Längen ($l$, $l_1$, $l_2$), als Teilesatz vorhanden sind.

5. Hochdachträger-Element nach einem der Ansprüche 1 bis 4, dadurch gekennzeichnet, dass die Zwischenstücke (14) jeweils durch ein Rohr, bevorzugt aus dem gleichen Halbzeug, aus dem die Stützbeine (5) oder die Befestigungsfüsse (6) bestehen, mit einem einseitig angesetzten Steckzapfen (21) gebildet sind.

6. Hochdachträger-Element nach einem der Ansprüche 1 bis 5, dadurch gekennzeichnet, dass die Verbindungsstrebe (7) mit den Stützbeinen (5) an deren dem Befestigungsfuss (6) abgewandten Ende verbunden ist.

7. Hochdachträger-Element nach Anspruch 6, dadurch gekennzeichnet, dass die beiden Stützbeine (5) und die Verbindungsstrebe (7) als U-förmiges Formteil einstückig hergestellt sind.

8. Hochdachträger-Element nach einem der Ansprüche 1 bis 7, dadurch gekennzeichnet, dass die Zwischenstücke (14) durch eine Strebe (23) miteinander verbunden sind.

9. Hochdachträger-Element nach Anspruch 8, dadurch gekennzeichnet, dass die Strebe (23) lösbar durch die Strebe (23) durchfassende und in die Zwischenstücke (14 einschraubbare Schrauben (19) verbunden ist.

10. Hochdachträger-Element nach Anspruch 8 oder 9, dadurch gekennzeichnet, dass an beiden Enden der Strebe (23) Formstücke (24) angeordnet sind, die die Zwischenstücke (14) zumindest teilweise umgreifen.

11. Hochdachträger-Element nach einem der Ansprüche 1 bis 10, wobei Hochdachträger-Elementenpaare durch einen Tragholm miteinander verbunden sind, dadurch gekennzeichnet, dass der Tragholm (4) durch anschraubbare Klemmschellen (25) am den Befestigungsfüssen (6) abgewandten Ende der Stützbeine (5) mit diesen verbunden ist.

12. Hochdachträger-Element nach Anspruch 11, dadurch gekennzeichnet, dass die Klemmschellen (25) bevorzugt auf der Oberseite der Verbindungsstrebe (7) angeordnet sind.

## Revendications

1. Elément rallongeable de porte-bagages surélevé (3) pour véhicule automobile, constitué de deux jambes de support (5) comportant chacune un pied de fixation (6) et d'une traverse de liaison (7) qui est solidaire de ces deux jambes de support (5), ces dernières étant rendues solidaires de leurs pieds de fixation (6) par une jonction par emboîtement (16) les réunissant, caractérisé en ce que, pour rallonger à volonté les jambes de support (5), il est prévu au moins une pièce intermédiaire emboîtable (14), chaque pièce étant emboîtée entre la jambe de support (5) et le pied de fixation (6) associés.

2. Elément de porte-bagages surélevé suivant la revendication 1, caractérisé en ce que les jonctions par emboîtement (16) comprennent un tenon d'emboîtement (17) s'étendant dans le sens de la longueur de la jambe de support (5) et un logement d'emboîtement (18) de dimension correspondante en section transversale.

3. Elément de porte-bagages surélevé suivant l'une des revendications 1 ou 2, caractérisé en ce que les jambes de support (5) et/ou les pieds de fixation (6) sont réalisés à partir d'un produit semi-fini tubulaire et le logement d'emboîtement (18) est constitué par la section transversale intérieure de ce produit semi-fini.

4. Elément de porte-bagages surélevé suivant l'une des revendications 1 à 3, caractérisé en ce qu'il existe plusieurs pièces intermédiaires (14) de différentes longueurs $(1, 1_1, 1_2)$ formant un jeu de pièces.

5. Elément de porte-bagages surélevé suivant l'une des revendications 1 à 4, caractérisé en ce que les pièces intermédiaires (14) sont formées chacune d'un tube, réalisé de préférence à partir du même produit semi-fini dont sont formés les jambes de support (5) ou les pieds de fixation (6), ce tube comportant un tenon d'emboîtement (21) placé sur lui à un bout.

6. Elément de porte-bagages surélevé suivant l'une des revendications 1 à 5, caractérisé en ce que les traverses de liaison (7) sont solidaires des jambes de support (5) à l'extrémité de celles-ci opposée au pied de fixation (6).

7. Elément de porte-bagages surélevé suivant la revendication 6, caractérisé en ce que les deux jambes de support (5) et la traverse de liaison (7) sont réalisées en une seule pièce sous la forme d'une pièce préformée en U.

8. Elément de porte-bagages surélevé suivant l'une des revendications 1 à 7, caractérisé en ce que les pièces intermédiaires (14) sont réunies entre elles par une traverse (23).

9. Elément de porte-bagages surélevé suivant la revendication 8, caractérisé en ce que la traverse (23) est fixée de manière amovible par des vis traversant la traverse (23) et pouvant se visser dans les pièces intermédiaires (14).

10. Elément de porte-bagages surélevé suivant l'une des revendications 8 ou 9, caractérisé en ce que des parties préformées (24), qui entourent au moins partiellement les pièces intermédiaires (14), sont prévues aux deux extrémités de la traverse (23).

11. Elément de porte-bagages surélevé suivant l'une des revendications 1 à 10, dans lequel des paires d'éléments de porte-bagages surélevé sont réunies entre elles par un longeron porteur, caractérisé en ce que ce longeron porteur (4) est réuni aux jambes de support (5), à l'extrémité de celles-ci située à l'opposé du pied de fixation (6), par des colliers de serrage (25) pouvant être montés par vissage.

12. Elément de porte-bagages surélevé suivant la revendication 11, caractérisé en ce que les colliers de serrage (25) sont de préférence disposés sur le côté supérieur des traverses de liaison (7).

## Claims

1. An extensible roof carrier element (3) for a motor vehicle comprising two supporting legs (5) each provided with a securing foot (6) and a connecting strut (7) connected to the two supporting legs (5),the supporting legs (5) and their securing feet (6) being connected together by a push-in connection (16), characterised in that for optional extension of the supporting legs (5) at least one push-in intermediate piece (14) is provided which is inserted between the respective supporting leg (5) and securing foot (6).

2. A roof carrier element according to claim 1, characterised in that the push-in connections (16) comprise a push-in peg (17) extending axially of the supporting leg (5) and a socket (18) fo corresponding cross-section.

3. A roof carrier element according to claim 1 or claim 2, characterised in that the supporting legs (5) and/or the securing feet (6) are made from a tubular semi-finished product and the socket (18) is formed by the internal section of the semi-finished product.

4. A roof carrier element according to any one of claims 1 to 3, characterised in that a plurality of intermediate pieces (14) of different lengths $(l, l_1, l_2)$ are provided as a set of parts.

5. A roof carrier element according to any one of claims 1 to 4, characterised in that the intermediate pieces (14) are made from a tube, preferably from the same semi-finished product used for the supporting legs (5) or the securing feet (6), having a centre spigot (21) attached on one side.

6. A roof carrier element according to any one of claims 1 to 5, characterised in that the connecting strut (7) is connected to the supporting legs (5) at their ends remote from the securing foot (6).

7. A roof carrier element according to claim 6, characterised in that the two supporting legs (5) and the connecting strut (7) are made in one piece as a U-shaped part.

8. A roof carrier element according to any one of claims 1 to 7, characterised in that the intermediate pieces (14) are connected together by a strut (23).

9. A roof carrier element according to claim 8, characterised in that the strut (23) is releasably connected by screws (19) that engage through the strut (23) and into the intermediate piece (14).

10. A roof carrier element according to claim 8 or claim 9, characterised in that shaped parts (24) are arranged at both ends of the strut (23) which engage at least partly round the intermediate pieces (14).

11. A roof carrier element according to any one of claims 1 to 10 in which pairs of roof carrier elements are connected together by a bearer cross-tie, characterised in that the cross-tie (4) is connected to the supporting legs (5) at their ends remote from the securing feet (6) by clamping clips (25) which can be screwed on.

12. A roof carrier element according to claim 11, characterised in that the clamping clips (25) are preferably arranged on the top of the connecting strut (7).

1/2

FIG. 1

2/2

FIG. 2

FIG. 3